# EUROPÄISCHE PATENTSCHRIFT

(11) **EP 2 520 005 B1**
(45) Veröffentlichungstag und Bekanntmachung des Hinweises auf die Patenterteilung: **03.02.2021**
(21) Anmeldenummer: 10774195.1
(22) Anmeldetag: 29.10.2010
(51) Int. Cl.: H02K 15/095, H02K 3/28, H02K 1/14, H02K 15/02

(54) **HERSTELLUNGSVERFAHREN EINES STATORS AUS SEGMENTEN EINSCHLIESSLICH DES BEWICKELNS UND ZUGEHÖRIGER STATOR**
MANUFACTURING METHOD OF A SEGMENTED STATOR INCLUDING WINDING STEP AND CORRESPONDING STATOR
PROCÉDÉ DE FABRICATION D'UN STATOR SEGMENTÉ COMPRENANT L'ÉTAPE DE BOBINAGE ET STATOR CORRESPONDANT

(30) Priorität: 29.12.2009 DE 102009060838
(43) Veröffentlichungstag der Anmeldung: 07.11.2012
(73) Patentinhaber: Robert Bosch GmbH, 70442 Stuttgart (DE)
(72) Erfinder: HUBER, Michael, 77836 Rheinmuenster (DE)
(86) Internationale Anmeldenummer: PCT/EP2010/066434
(87) Internationale Veröffentlichungsnummer: WO 2011/079978

(56) Entgegenhaltungen:
- EP-A1- 1 780 868
- WO-A1-01/99254
- DE-A1-102006 021 903
- DE-A1-102007 006 095
- DE-A1-102008 054 527
- US-A1- 2002 011 755
- US-A1- 2006 022 544

## Beschreibung

### Stand der Technik

### Offenbarung der Erfindung

Mit der DE 10 2007 006 095 A1 ist ein Herstellungsmethode für einen Stator bekannt geworden, bei der eine Mehrzahl von einzelnen separaten Statorkernen bewickelt werden, bevor diese zu einem gemeinsamen Stator zusammengesetzt werden. Zum Bewickeln werden dabei zwei Teilkerne gegenüberliegend auf einer gemeinsamen Achse angeordnet. Ein Verbindungsdraht zwischen den beiden Teilkernen wird beim Anordnen der Teilkerne zum Stator axial oberhalb der Teilkerne, quer zum radialen Innenraum angeordnet. In einem weiteren Verfahrensschritt werden diese Verbindungsdrähte axial nach außen und axial gegen die Teilkerne gedrückt. Eine solche Montage des Stators benötigt ein zusätzliches Montagewerkzeug zur Anordnung der Verbindungsdrähte zwischen Teilspulen, sowie damit verbunden einen zusätzlichen Montageschritt.

Mit der US 2006/022544 A1 und der US 2002/011755A1 sind Statoren von elektrische Maschinen bekannt geworden, bei denen mehrere Teilspulen von separat gefertigten Statorsegmenten mittels eines ununterbrochenen Wickeldrahts durchgewickelt sind. Die WO 01/99254A1 beschreibt einen Elektromotor mit einzelnen Statorsegmenten, deren Wicklung jeweils einzeln oder blockweise zu einer Verbindung mit einer Energieversorgung zusammengefasst ist. In der DE 10 2006 021 903 A1 wird eine Isoliermaske eines Statorzahns beschrieben, bei dem der Wickeldraht der Spule jeweils radial durch Schlitze in der Isolierlamelle nach außen geführt wird und hier mittels eines Anschlusselements mit einer benachbarten Spule verbunden wird.

In der EP 1 780 868 A1 ist ein Stator einer elektrischen Maschine offenbart, bei der einzelne Statorzähne gelenkig über ein verformbares Joch fest miteinander verbunden sind. Dabei sind mehrere Einzelzahnspulen der Statorzähne mittels eines ununterbrochenen Draht durchgewickelt. Mit der DE 10 2008 054 527 A1 ist ein Stator mit separat gefertigten Statorsegmenten bekannt geworden, deren Statorzähne als Einzelzahnspulen bewickelt sind. Dabei wird der Spulenanfang und das Spulenende mittels Schneidklemmverbindungen mit einer Anschlussplatte verbunden.

### Offenbarung der Erfindung

### Vorteile der Erfindung

Der erfindungsgemäße Stator und das erfindungsgemäße Verfahren zum Herstellen eines Stators mit den Merkmalen der unabhängigen Ansprüche hat demgegenüber den Vorteil, dass bei der Anordnung separat gefertigter Statorsegmente mit durchgewickelten ununterbrochenen Teilspulen unmittelbar nebeneinander, der Verbindungsdraht zwischen den Teilspulen mit dem Anordnen der Statorsegmente in seine endgültige Montageposition gebracht wird. Dadurch wird einerseits der nachträgliche Verschaltungsaufwand der Teilspulen reduziert und andererseits entfällt ein zusätzlicher Montageschritt für die endgültige Positionierung der Verbindungsdrähte. Die Herstellung solcher, in Umfangsrichtung benachbarter Teilspulen als Zwillingsspulen erlaubt somit eine montagetechnisch günstige Variationsmöglichkeit für elektrische Maschinen mit unterschiedlichen elektrischen Wicklungssträngen.

Die Isoliermaske ragt axial über die Kreissegmente hinaus, wobei in diesem Bereich radiale Schlitze angeordnet sind, durch die der Spulendraht geführt wird. Bei einer erfindungsgemäßen Zwillingsspule wird der Verbindungsdraht zwischen den beiden Teilspulen durch eine erste axiale Aussparung des ersten Statorsegments radial nach außen geführt und durch eine weitere radiale Aussparung in der Isoliermaske des zweiten Statorsegments wieder radial nach innen geführt. Dadurch wird der Spulendraht zwischen den beiden Teilspulen zuverlässig fixiert, so dass auch bei einem Verschwenken der beiden Statorsegmente die Teilspulen straff gewickelt bleiben.

Erfindungsgemäß verläuft der Verbindungsdraht radial außerhalb der Isoliermasken wodurch axialer Bauraum eingespart wird, und kein weiterer separater Montageschritt für die Positionierung der Verbindungsdrähte zwischen den Teilspulen notwendig ist. Dieser radial außerhalb der Isoliermaske verlaufende Verbindungsdraht stellt gleichzeitig eine gelenkartige Verbindung zwischen den beiden Statorsegmenten dar, mittels derer die Statorsegmente nach deren Bewickeln verschwenkt werden können.

Bezüglich der Reduzierung des axialen Bauraums ist es erfindungsgemäß günstig, wenn die Verbindungsdrähte axial innerhalb der maximalen axialen Ausdehnung der Isoliermasken angeordnet werden.

Durch die in den abhängigen Ansprüchen aufgeführten Maßnahmen sind vorteilhafte Weiterbildungen und Verbesserungen der in den abhängigen Ansprüchen vorgegebenen Ausführungen möglich. Besonders vorteilhaft können solche Zwillingsspulen bewickelt werden, indem die Zahnachsen der beiden Statorsegmente während dem Bewickeln von der Axialrichtung des fertig montierten Stators abweichen. Während dem Wickeln schneiden sich die Zahnachsen radial innerhalb des Statorrings nicht. Dabei sind die radial äußeren Kreissegmente der Statorsegmente benachbart angeordnet, wobei die Zahnachsen vorzugsweise nicht parallel ausgerichtet sind.

Besonders günstig ist es, wenn die Zahnachsen bezüglich des Kreismittelpunktes des fertig montierten Statorrings einen sogenannten Wickelwinkel zwischen 40° und 120° bilden. Besonders bevorzugt wird ein Wickelwinkel zwischen 60° und 90°.

Nach dem Bewickeln des zweiten Statorsegments kann dieses in besonders einfacher Weise gegenüber dem ersten Statorsegment verschwenkt werden, so dass der Wickelwinkel geschlossen wird. Die beiden Statorsegmente werden so lange gegeneinander verdreht, bis sich die Zahnachsen innerhalb des Statorrings näherungsweise in dessen Mittelpunkt schneiden. Dadurch werden die Zahnachsen dieser Zwillingsspule schon in Radialrichtung ausgerichtet, bevor der Statorring komplett montiert ist. Beim Verschwenken der beiden Statorelemente wird der Verbindungsdraht zwischen den beiden Teilspulen als eine Art Gelenk oder Scharnier, um die die beiden Statorzähne gedreht werden. Bei einer solchen Wicklungsanordnung der beiden Statorelemente ist um die beiden Statorzähne herum so viel Freiraum, dass verschiedene Wickeltechniken, wie beispielsweise eine Spulenwickeltechnik oder Nadelwickeln oder Flyerwickeln angewendet werden kann. Ebenso können die beiden Spulen beliebig in gleichsinniger oder gegensinniger Wickelrichtung gewickelt werden.

Besonders günstig ist es, die Statorsegmente als Statorzähne mit sich daran anschließendem Kreissegmenten auszubilden, so dass magnetisch leitfähige T-Stücke entstehen. Diese können bevorzugt in Axialrichtung aus einzelnen Lamellenblechen aufgebaut sein. Zur zuverlässigen Isolierung des Spulendrahts gegen die Statorsegmente weisen letztere eine Isoliermaske auf, die beispielsweise zweiteilig ausgebildet ist, und in axialer Richtung auf die Statorelemente aufgeschoben wird.

Erfindungsgemäß ist es vorgesehen, den Verschaltungsaufwand der Statorspulen weiter zu reduzieren, indem eine oder mehrere Teilspulen anschließend an die Zwillingsspulen mittels eines ununterbrochenen Spulendrahts durchgewickelt werden. Die dritte oder weitere Teilspule ist dabei vorzugsweise in Umfangsrichtung beabstandet zur Zwillingsspule angeordnet, derart, dass Teilspulen eines anderen Wicklungsstranges dazwischen angeordnet werden. Bei einem Stator mit 18 Statorsegmenten wird das dritte Statorsegment mit dem ununterbrochen durchgewickelten Spulendraht bevorzugt etwa 120° versetzt zum zweiten Statorelement angeordnet.

Erfindungsgemäß ist es besonders günstig, die Verbindungsdrähte zwischen den ununterbrochen durchgewickelten Teilspulen in Umfangsrichtung außerhalb der Isoliermasken zu führen. Dies gilt für die Verbindungsdrähte der Zwillingsspulen, aber auch für die weiteren Verbindungsdrähte zu der dritten oder optional weiteren durchgewickelten Teilspule. Dadurch ist im axialen Bereich über den Teilspulen genügend Bauraum für weitere axial angeordnete Bauelemente vorhanden.

Nach dem Bewickeln können die einzelnen Statorsegmente vorteilhaft im Bereich der Kreissegmente miteinander verschweißt werden. Als weitere Verbindungsmöglichkeit der Statorsegmente können diese in einem Ring eingespannt werden oder miteinander verklebt werden.

Ein nach diesem Herstellungsverfahren gefertigter Stator kann einerseits einen höheren Füllfaktor der Wicklung erzielen und gleichzeitig kann der Verschaltungsaufwand der einzelnen Teilspulen reduziert werden. Erfindungsgemäß werden sogenannte Zwillingsspulen, bestehend aus zwei unmittelbar benachbarten, direkt durchgewickelten Teilspulen, im Kreisring des Stators angeordnet sind.

In einer bevorzugten Ausführung weist der Stator sechs Wicklungsstränge, mit beispielsweise je drei Teilspulen auf. Dabei ist in jedem Wicklungsstrang je eine Zwillingsspule angeordnet, wobei eine dritte oder optional weitere Teilspule ununterbrochen durchgewickelt ist. Günstig ist es, hier jeweils zwei Wicklungsstränge parallel zu schalten, so dass der Stator drei elektrische Phasen aufweist.

Vorteilhaft wird der Stator für eine elektrische Maschine verwendet, bei der der Rotor integrierte Permanentmagnete aufweist. Diese Permanentmagnete können beispielsweise speichenartig (Längsrichtung der Magnete in Radialrichtung) oder Tangential (Längsrichtung in Umfangsrichtung) angeordnet werden. Der Stator des Elektromotors kann beispielsweise kostengünstig in ein Gehäuseteil eingeklebt werden.

### Kurze Beschreibung der Zeichnungen

Ausführungsbeispiele der Erfindungen sind in den Zeichnungen dargestellt und in der nachfolgenden Beschreibung näher erläutert.

Es zeigen:
Figur 1 eine elektrische Maschine,
Figur 2 ein Ausführungsbeispiel eines Wicklungsstranges,
Figur 3 eine Draufsicht auf eine erfindungsgemäße Zwillingsspule und
Figur 4 eine Wickelvorrichtung für ein erfindungsgemäßes Herstellungsverfahren.

### Ausführungsformen der Erfindung

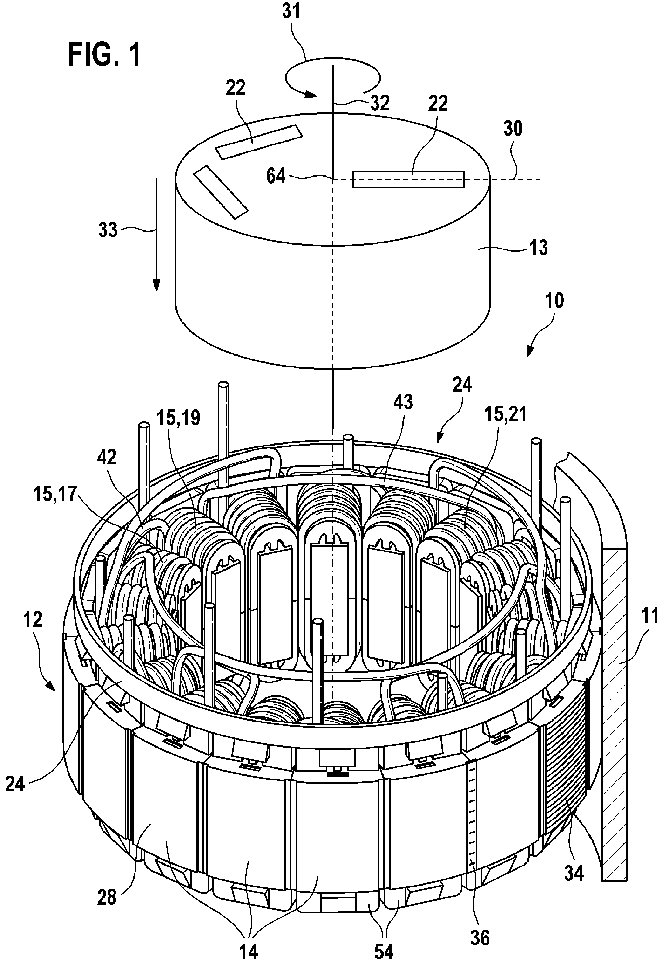

In Figur 1 ist als Beispiel einer elektrischen Maschine 10 ein Elektromotor schematisch dargestellt, bei dem drehbar ein Rotor 13 innerhalb eines Stators 12 angeordnet ist. Der Rotor 13 weist hier Permanentmagnete 22 auf, die beispielsweise mit ihrer Längsrichtung in Radialrichtung 30 oder mit ihrer Längsrichtung in Umfangsrichtung 31 angeordnet sind. Der Elektromotor ist beispielsweise als Innenläufer ausgeführt, bei dem der Stator 12 fest in einem Gehäuseteil 11 fixiert, beispielsweise eingeklebt ist. Der Stator 12 ist aus einzelnen Statorsegmenten 14 zusammengesetzt und bildet einen Kreisring 15, in dessen Innenraum der Rotor 13 drehbar auf einer Drehachse 32 gelagert ist.

Bei dem Herstellungsverfahren des Stators 12 werden separat hergestellte Statorsegmente 14 zuerst mit Teilspulen 17, 19, 21 bewickelt, bevor die Statorsegmente 14 fest zu dem Kreisring 24 verbunden werden. Die Statorsegmente 14 weisen jeweils einen Statorzahn 26 und ein Kreissegment 28 auf, die aus magnetisch leitendem Material gefertigt sind und einen magnetischen Kern 29 bilden. Dabei ist der Statorzahn 26 mit dem Kreissegment 28 verbunden, so dass das Statorsegment T-förmig ausgebildet ist. Dieser magnetische Kern 29 des Statorsegments 14 ist in Axialrichtung 33 beispielsweise aus einzelnen Lamellenblechen 34 zusammengesetzt. Die einzelnen Statorsegmente 14 sind im Ausführungsbeispiel gemäß Figur 1 beispielsweise mittels Schweißnähten 36 miteinander verbunden, die zwischen den Kreissegmenten 28 in Längsrichtung 33 ausgebildet sind. Alternativ können die einzelnen Statorsegmente 14 auch miteinander verklebt werden oder direkt in einen Spannring, beispielsweise im Gehäuseteil 11 verspannt werden.

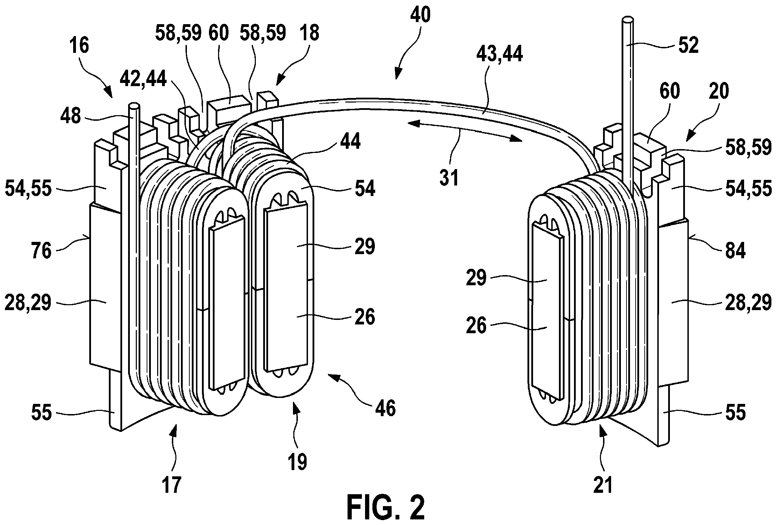

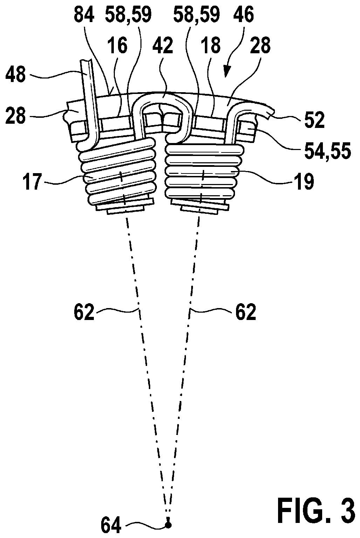

Figur 2 zeigt einen erfindungsgemäßen Wicklungsstrang 40 gemäß der Ausführung von Figur 1. Dabei ist ein erstes Statorsegment 16 mit einer ersten Teilspule 17 unmittelbar benachbart zu einem zweiten Statorsegment 18 mit einer zweiten Teilspule 19 angeordnet. Die erste Teilspule 17 ist mittels eines Verbindungsdrahts 42 mit der zweiten Teilspule 19 verbunden, wobei die beiden Teilspulen 17, 19 ununterbrochen mit einem durchgehenden Spulendraht 44 durchgewickelt sind. Die in Umfangsrichtung 31 unmittelbar benachbarten Teilspulen 17, 19 werden auch als Zwillingsspule 46 bezeichnet. Die erste Teilspule 17 weist eine Drahtzuführung 48 auf und ist gegen den Uhrzeigersinn gewickelt. Die zweite Teilspule 19 beginnt mit dem Verbindungsdraht 42 und ist im Uhrzeigersinn gewickelt. Das heißt, die beiden Teilspulen 17, 19 der Zwillingsspule 46 sind gegensinnig gewickelt. Im Ausführungsbeispiel gemäß Figur 3 sind die beiden Teilspulen 17, 19 mit einer gleichsinnigen Wicklung dargestellt. Das Ende der zweiten Teilspule 19 geht in einen zweiten Verbindungsdraht 43 über, der ununterbrochen zu einer dritten Teilspule 21 führt, die in Umfangsrichtung 31 beabstandet angeordnet ist. Die dritte Teilspule 21 weist hier einen Drahtabgang 52 auf, so dass der dargestellte Wicklungsstrang 40 mit der Drahtzuführung 48 und dem Drahtabgang 52 drei Teilspulen 15 mit einem ununterbrochenen durchgewickelten Spulendraht 44 umfasst. Der Stator 12 gemäß Figur 1 weist achtzehn Statorsegmente 14 mit achtzehn Teilspulen 15 auf. Hierbei ist das dritte Statorsegment 20 beispielsweise näherungsweise 120° gegenüber dem zweiten Statorsegment 18 versetzt im Kreisring 24 angeordnet. Auf den Statorzähnen 26 der Statorsegmente 14 sind Isoliermasken 54 angeordnet, die den magnetischen Kern 29 gegenüber dem Spulendraht 44 isolieren. Die Isoliermasken 54 sind beispielsweise aus Kunststoff hergestellt. Durch die zweitteilige Ausbildung der Isoliermaske 54 können die beiden Teile in axialer Richtung 33 auf die Statorzähne 26 aufgeschoben werden. Die Isoliermaske 54 überragt den magnetischen Kern 29 in Axialrichtung 33, so dass eine radial äußere Begrenzung 55 für die Teilspulen 15 angeordnet ist.

In Figur 3 ist eine Ausführung einer Zwillingsspule 46 dargestellt, bei der die erste Teilspule 17 ebenfalls zusammen mit der zweiten Teilspule 19 ununterbrochen mit einem durchgehenden Spulendraht 44 durchgewickelt ist. Der Verbindungsdraht 42 zwischen der ersten und der zweiten Teilspule 17, 19 wird hierbei durch radiale Aussparungen 58 der Isoliermaske 54 radial nach außen geführt. Dadurch ist der Verbindungsdraht 42 zwischen der ersten und der zweiten Teilspule 17, 19 schon während des Wickelverfahrens und auch nach der fertigen Montage der Statorsegmente 14 radial außerhalb der Isoliermaske 54 angeordnet. Zusätzlich ist der Verbindungsdraht 42 axial unterhalb der oberen Kante 60 der Isoliermaske 54 angeordnet, so dass sich der Verbindungsdraht 42 bezüglich der Axialrichtung 33 nicht über die axialen Ausdehnungen der Isoliermaske 54 erstreckt. Das erste und das zweite Statorsegment 16, 18 sind hier in vormontiertem Zustand dargestellt, bei dem sich die Zahnachsen 62 der beiden Statorsegmente 16, 18 im radialen Mittelpunkt 64 des Stators 12 schneiden. Bei dieser Anordnung der beiden Statorsegmente 16, 18 liegen die Zahnachsen 62 in Radialrichtung 30, wobei sich die Zahnachsen 62 radial innerhalb des Kreisrings 24 schneiden. Die radialen Aussparungen 58 sind ebenfalls in Figur 2 dargestellt, wobei dort kein Spulendraht 44 durch diese Aussparungen 58 geführt wird. Jede Isoliermaske 54 weist an ihrer Oberkante 60 zwei in Umfangsrichtung 31 versetzte radiale Aussparungen 58 auf, die beispielsweise als Schlitze 59 ausgebildet sind. In der Ausführung gemäß Figur 3 ist der Verbindungsdraht 42 bei einer gleichsinnigen Wicklung der beiden Teilspulen 17, 19 durch die beiden unmittelbar nebeneinanderliegenden radialen Aussparungen 58 der beiden unterschiedlichen Isoliermasken 54 geführt. Bei einer gegensinnig gewickelten Ausführung gemäß Figur 3 (nicht dargestellt) würde der Verbindungsdraht 42 jeweils durch eine radiale Aussparung 58 geführt werden, die jeweils am gleichen Rand (bezüglich der Umfangsrichtung 31) der beiden Isoliermasken 54 angeordnet sind.

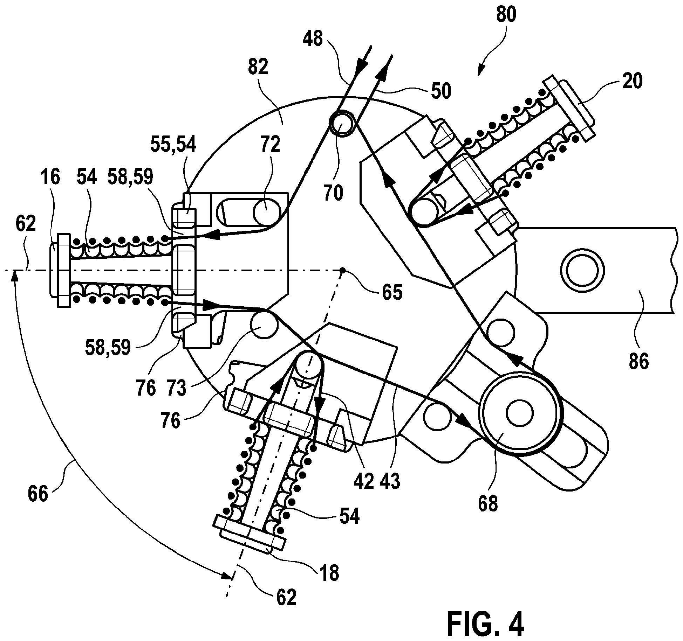

In Figur 4 ist eine Vorrichtung zum Bewickeln der Statorsegmente 14 dargestellt, anhand der das Wickelverfahren erläutert wird. Zum Bewickeln der beiden Statorsegmente 16 und 18 werden diese so angeordnet, dass deren beide Zahnachsen 62 sich radial außerhalb der Isoliermaske 54 im Punkt 65 schneiden. Dabei weisen die beiden Zahnachsen 62 radial innerhalb der Statorsegmente 14 voneinander weg, so dass diese gemäß Figur 4 etwa einen Wickelwinkel 66 zwischen 60° und 90° bilden. Durch diese Anordnung ist ringsum die Isoliermaske 54 genügend Platz, um die beiden Teilspulen 17, 19 jeweils beispielsweise mittels Spulenwickeltechnik oder mittels Nadelwickeln oder mittels Flyerwickeln herzustellen. Dabei wird nach der Fertigstellung der ersten Teilspule 17 der Spulendraht 44 als Verbindungsdraht 42 radial nach außen (bezüglich der radialen Begrenzung 55) durch die radiale Aussparung 58 geführt und wiederum durch eine weitere radiale Aussparung 58 des zweiten Statorsegments 18 radial nach innen auf die Isoliermaske 54 geführt. Dadurch können mittels eines ununterbrochenen Spulendrahts 44 beide Teilspulen 17, 19 in einem Stück durchgewickelt werden. In Figur 4 ist ein drittes Statorsegment 20 angeordnet, auf das eine dritte Teilspule 21 einstückig durchgewickelt wird. Dabei ist ein zweiter Verbindungsdraht 43 zwischen der zweiten Teilspule 19 und der dritten Teilspule 21 angeordnet, der bezüglich der fertigen Montageposition der Statorelemente 14 radial außerhalb der Isoliermasken 54 verläuft. Die Länge des zweiten Verbindungsdrahts 43 kann hierbei durch einen Abstandshalter 68 variabel eingestellt werden. Für die Ausbildung einer gegensinnigen Wicklung der beiden Teilspulen 17, 19 ist die Drahtführung schematisch dargestellt. Der Anfangspunkt 48 des Spulendrahts 44 ist in einem ersten Halteelement 70 fixiert und führt über ein Umlenkelement 72 radial von außen nach innen durch einen Schlitz 59, der in Draufsicht auf der linken Seite der Isoliermaske 54 angeordnet ist (in Umfangsrichtung 31). Anschließend wird der Spulendraht 44 aus Sicht des Statormittelpunkts 64 im Uhrzeigersinn auf die Isoliermaske 54 gewickelt und durch ein auf der rechten Seite angeordneten Schlitz 59 radial auf die Außenseite der Isoliermaske 54 geführt. Danach wird der Spulendraht 44 um ein weiteres Umlenkelement 73 geführt und durch einen Schlitz 59 auf der vom Mittelpunkt 64 aus betrachtet rechten Seite der Isoliermaske 54 radial nach innen die Isoliermaske 54 des zweiten Statorsegments 18 geführt, um hier im Uhrzeigersinn gewickelt zu werden. Anschließend wird der Spulendraht 44 durch den linken Schlitz 59 radial außerhalb der radialen Begrenzung 55 geführt und über den Abstandshalter 68 radial von außen auf die Innenseite der Isoliermaske 54 des dritten Statorsegments 20 geleitet, um dort die dritte Teilspule 21 auszubilden. Der Drahtabgang 52 wird wiederum durch einen Schlitz 59 radial auf die Außenseite (radial außerhalb des Kreisrings 24 der Isoliermaske 54 geführt, um am Ausgangspunkt 50 (beim Halteelement 70) zu enden. Die Drahtführung ist in Fig. 4 durch Pfeile des Spulendrahts 44 dargestellt. Zur Herstellung der Stators 12 werden die Statorsegmente 16 und 18 anschließend derartig gegeneinander verschwenkt, dass deren beiden Zahnachsen 62 bezüglich des Mittelpunkts 64 sich aufeinander zudrehen, bis sie sich schließlich im Mittelpunkt 64 kreuzen. Bei diesem Verschwenken werden die beiden Kreissegmente 28 der beiden Statorsegmente 16, 18 derartig aufeinander zu bewegt, dass deren Seitenflächen 76 in Umfangsrichtung 31 an einander anliegen. Dabei bleibt der Verbindungsdraht 42 der beiden Teilspulen 17, 19 sowohl während des Wickelns als auch in der endgültigen Montageposition radial außerhalb der Isoliermaske 54 angeordnet. Der Verbindungsdraht 42 dient während des Verschwenkens als Gelenk oder Scharnier, mittels dem die beiden Statorsegmente 16, 18 beweglich miteinander verbunden sind.

Zum Bewickeln der Statorsegmente 16, 18, 20 sind diese in einer Wickelvorrichtung 80 aufgenommen, in der der Wickelwinkel 66 zwischen den Teilspulen 17, 19, 21 einstellbar ist. Die Statorsegmente 16, 18, 20 werden hierzu auf eine Aufnahmeplatte 82 gespannt, derart, dass die Außenseite 84 (bezüglich des Kreisrings24) der Statorsegmente 16, 18, 20, sowie der Isoliermasken 54 zur Mitte (Punkt 65) der Aufnahmeplatte 82 hinzeigt. Die Statorsegmente 16, 18, 20 sind in einer bevorzugten Ausführung drehbar um die Zahnachsen 62 gelagert, wobei die Statorzähne 26 zum Bewickeln um die Zahnachsen 62 rotiert werden. Die Verbindungsdrähte 42, 43 verlaufen hierbei radial außerhalb der Isoliermasken 54, das heißt zwischen den Außenseiten 84 der Statorsegmente 16, 18, 20. Zur Rotation der Statorsegmente 16, 18, 20 ist die Aufnahmeplatte 82 drehbar auf einer Antriebswelle 86 gelagert. Durch eine Drehung der Aufnahmeplatte 84 um den Punkt 65 kann das jeweils zu bewickelnde Statorsegment 16, 18, 20 mit seiner Zahnachse 62 parallel zur Antriebswelle 86 ausgerichtet werden. Zum Bewickeln wird dann die gesamte Aufnahmeplatte 84 mit allen Statorsegmenten 16, 18, 20 um die Antriebswelle 86 rotiert.

Es sei angemerkt, dass hinsichtlich der in den Figuren und der in der Beschreibung gezeigten Ausführungsbeispiele vielfältige Kombinationsmöglichkeiten der einzelnen Merkmale untereinander möglich sind. So kann beispielsweise die konkrete Anzahl und Ausbildung der Statorelemente 14 und der Teilspulen 15 entsprechend der Anwendung variiert werden. So kann in einem Wickelstrang 40 auch nur eine Zwillingsspule 46 ununterbrochen durchgewickelt werden und weitere Teilspulen nach der Verbindung der Statorsegmente 14 mittels separaten elektrischen Verbindungen bzw. Verschaltelementen elektrisch verbunden werden. Bei 18 Statorsegmenten 14 werden dann beispielsweise sechs Zwillingsspulen 46 angeordnet, wodurch die Anzahl der Kontaktierstellen 48, 52 von 36 auf 24 reduziert werden. Diese werden vorzugsweise mittels eines nachträglich montierbaren Verschaltungsrings elektrisch kontaktiert. Auch die Verschaltung der einzelnen Wicklungsstränge kann parallel oder seriell ausgeführt werden, um die entsprechenden elektrischen Phasen zu bilden - insbesondere einen bürstenlosen Gleichstrommotor (EC-Motor). Das Herstellungsprinzip des Stators 12 ist grundsätzlich auch auf einen Rotor anwendbar, der als Außenläufer ausgebildet ist. Bevorzugt wird die erfindungsgemäße Antriebseinheit 10 zu Verstellung beweglicher Teile im Kraftfahrzeug - beispielsweise als Lenkhilfemotor - verwendet, ist jedoch nicht auf eine solche Anwendung beschränkt.

## Patentansprüche

1. Verfahren zum Herstellen eines Stators (12), auf dem mehrere elektrische Wicklungsstränge (40) mit einzelnen Teilspulen (15) angeordnet sind, **gekennzeichnet durch** folgende Schritte:
- Fertigen von mehreren separaten Statorsegmenten (14), die Isoliermasken (54) aufweisen,
- Bewickeln eines ersten Statorsegments (16) mit einer ersten Teilspule (17),
- Bewickeln eines zweiten Statorsegments (18) mit einer zweiten Teilspule (19) mit einem durchgewickelten ununterbrochenen Spulendraht (44),
- Bewickeln eines dritten Statorsegments (20) mit einer dritten Teilspule (21) mit dem durchgewickelten ununterbrochenen Spulendraht (44),
- Anordnen des ersten und des zweiten Statorsegments (16, 18) mit erster und zweiter Teilspule (17,19) unmittelbar nebeneinander in Umfangrichtung (31) des Stators (12),
- Anordnen von weiteren Statorsegmenten (20) zu einem Kreisring (24,
- Mechanisches Verbinden der einzelnen Statorsegmente (16, 18, 20),
- wobei die Isoliermasken (54) radiale Aussparungen (58) aufweisen, durch die in Radialrichtung (30) der Verbindungsdraht (42) zwischen der ersten und der zweiten Teilspule (17, 19) geführt wird, die zusammen eine Zwillingsspule (46) bilden,
- wobei der Verbindungsdraht (42) vor dem Bewickeln des zweiten Statorsegments (18) radial außerhalb der Isoliermasken (54) angeordnet ist,
- wobei der Verbindungsdraht (42) beim Wickeln bezüglich einer Axialrichtung (33) des Stators (12) nicht über die Isoliermaske (54) hinausragt und
- wobei der Verbindungsdraht (42) zwischen der ersten und zweiten Teilspule (17, 19) und der Verbindungsdraht (43) zwischen der zweiten Teilspule (19) und der dritten Teilspule (21) auch nach der fertigen Montage radial außerhalb der Isoliermaske (54) verbleibt.

2. Verfahren zum Herstellen eines Stators (12) nach Anspruch 1, **dadurch gekennzeichnet dass** jedes Statorsegment (14) ein Kreissegment (28) mit einem Statorzahn (26) entlang einer Zahnachse (62) aufweist, wobei die Zahnachsen (62) der Statorzähne (26) in fertig montiertem, verbundenen Zustand der Statorsegmente (14) entlang einer Radialrichtung (30) zum Mittelpunkt (64) des Kreisrings (24) hin ausgerichtet sind, und während dem Bewickeln des zweiten Statorsegments (18) die Lage der Zahnachse (62) des zweiten Statorsegments (18) von der Radialrichtung (30) abweicht, und insbesondere nicht parallel zur Zahnachse (62) des ersten Statorelements (16) ausgerichtet ist.

3. Verfahren zum Herstellen eines Stators (12) nach einem der vorhergehenden Ansprüche, **dadurch gekennzeichnet, dass** während dem Bewickeln des zweiten Statorsegments (18) die erste und die zweite Zahnachse (62) einen Wickelwinkel (66) [Schnittpunkt (65) der Zahnachsen (62) radial außerhalb der Statorsegmente (14)] zwischen 40° und 120°, insbesondere zwischen 60° und 90° bilden.

4. Verfahren zum Herstellen eines Stators (12) nach einem der vorhergehenden Ansprüche, **dadurch gekennzeichnet dass** das zweite Statorsegment (18) nach dem Bewickeln desselben derart gegenüber des ersten Statorsegments (16) verschwenkt wird, dass die Zahnachse (62) des zweiten Statorsegments (18) in Radialrichtung (30) angeordnet wird, wobei der Spulendraht (44) zwischen dem ersten und dem zweiten Statorsegment (16, 18) als Verbindungsdraht (42) ausgebildet ist, der insbesondere beim Verschwenken als Gelenk oder Scharnier wirkt.

5. Verfahren zum Herstellen eines Stators (12) nach einem der vorhergehenden Ansprüche, **dadurch gekennzeichnet, dass** die erste und zweite Teilspule (17, 19) gegensinnig gewickelt sind - insbesondere mittels Flyerwickeln bewickelt werden.

6. Verfahren zum Herstellen eines Stators (12) nach einem der vorhergehenden Ansprüche, **dadurch gekennzeichnet, dass** die Teilspulen (15) auf Isoliermasken (54) aufgewickelt werden, die die Statorzähne (26) umschließen und insbesondere die Statorzähne (26) mit den Kreissegmenten (28) als T-förmige Lamellenbleche (34) ausgebildet werden.

7. Verfahren zum Herstellen eines Stators (12) nach einem der vorhergehenden Ansprüche, **dadurch gekennzeichnet, dass** auch die Drahtzuführung (48) der ersten Teilspule (17) und der Drahtabgang (52) der zweiten Teilspule (19) durch die radiale Aussparungen (58) geführt werden.

8. Verfahren zum Herstellen eines Stators (12) nach einem der vorhergehenden Ansprüche, **dadurch gekennzeichnet, dass** nach dem Bewickeln des zweiten Statorsegments (18) ein drittes und/oder ein weiteres Statorsegment (20) mit einem durchgewickelten ununterbrochen Spulendraht (44) bewickelt wird, und insbesondere das dritte Statorsegment (20) um einen Winkel von 100° bis 140° - vorzugsweise um näherungsweise 120° -zum zweiten Statorelement (18) in Umfangsrichtung (31) versetzt angeordnet ist.

9. Verfahren zum Herstellen eines Stators (12) nach einem der vorhergehenden Ansprüche, **dadurch gekennzeichnet, dass** auch alle weiteren ununterbrochen durchgewickelten Verbindungsdrähte (43) zu weiteren Teilspulen (15) radial außerhalb der Isoliermasken (54) angeordnet sind.

10. Verfahren zum Herstellen eines Stators (12) nach einem der vorhergehenden Ansprüche, **dadurch gekennzeichnet, dass** die Statorsegmente (14) mittels Kleben oder Schweißen oder Verklemmen miteinander mechanisch verbunden werden.

11. Stator (12) mit mehreren separat gefertigten, Isoliermasken (54) aufweisenden Statorsegmenten (14), wobei ein erstes Statorsegment (16) mit einer ersten Teilspule (17) und ein zweites Statorsegment (18) mit einer zweiten Teilspule (19) und ein drittes Statorsegment (20) mit einer dritten Teilspule (21) mit einem ununterbrochen Spulendraht (44) durchgewickelt ist, und das erste und das zweite Statorsegment (16, 18) mit erster und zweiter Teilspule (17, 19) unmittelbar nebeneinander in Umfangrichtung (31) des Stators (12) angeordnet sind, und weitere Statorsegmente (20) zu einem Kreisring (24) angeordnet und die einzelnen Statorsegmente (16, 18, 20) mechanisch miteinander verbunden sind, wobei die Isoliermasken (54) der Statorsegmente (16, 18) radiale Aussparungen (58) aufweisen, durch die in Radialrichtung (30) ein Verbindungsdraht (42) zwischen der ersten und der zweiten Teilspule (17, 19) geführt ist, die zusammen eine Zwillingsspule (46) bilden, wobei der Verbindungsdraht (42) zwischen der ersten und der zweiten Teilspule (17, 19) und der Verbindungsdraht (43) zwischen der zweiten Teilspule (19) und der dritten Teilspule (21) auch nach der fertigen Montage radial außerhalb der Isoliermaske (54) verbleibt, und bezüglich der Axialrichtung (33) des Stators (12) nicht über die Isoliermaske (54) hinaus ragt.

12. Stator (12) nach Anspruch 11, **dadurch gekennzeichnet, dass** der Stator (12) drei elektrische Phasen mit jeweils zwei parallel geschalteten Wicklungssträngen (40) aufweist, wobei insbesondere jeder Wicklungsstrang (40) eine Zwillingsspule (46) aufweist, die sich aus zwei in Umfangsrichtung (31) unmittelbar benachbarte, mit einem ununterbrochen Spulendraht (44) durchgewickelten Teilspulen (17, 19) zusammensetzt.

13. Elektrische Maschine (10) mit einem Stator (12) nach einem der Ansprüche 11 oder 12, **dadurch gekennzeichnet, dass** radial innerhalb des Stators (12) ein Permanentmagnete (22) aufweisender Rotor (13) drehbar gelagert ist, und der Stator (12) insbesondere in ein Gehäuseteil (11) eingeklebt ist.

## Claims

1. Method for producing a stator (12) on which a plurality of electrical winding phases (40) with individual coil elements (15) are arranged, **characterized by** the following steps:
- manufacturing a plurality of separate stator segments (14) which have insulating masks (54),
- winding a first stator segment (16) with a first coil element (17),
- winding a second stator segment (18) with a second coil element (19) with a continuously wound uninterrupted coil wire (44),
- winding a third stator segment (20) with a third coil element (21) with the continuously wound uninterrupted coil wire (44),
- arranging the first and the second stator segment (16, 18) with the first and second coil element (17, 19) immediately next to one another in the circumferential direction (31) of the stator (12),
- arranging further stator segments (20) to form a circular ring (24),
- mechanically connecting the individual stator segments (16, 18, 20),
- wherein the insulating masks (54) have radial cutouts (58) through which the connecting wire (42) between the first and the second coil element (17, 19), which together form a twin coil (46), is guided in the radial direction (30),
- wherein the connecting wire (42) is arranged radially outside the insulating masks (54) before winding of the second stator segment (18),
- wherein the connecting wire (42) does not protrude beyond the insulating mask (54) with respect to an axial direction (33) of the stator (12) during winding, and
- wherein the connecting wire (42) between the first and the second coil element (17, 19) and the connecting wire (43) between the second coil element (19) and the third coil element (21) remain radially outside the insulating mask (54) even after assembly is complete.

2. Method for producing a stator (12) according to Claim 1, **characterized in that** each stator segment (14) has a circular segment (28) with a stator tooth (26) along a tooth axis (62), wherein the tooth axes (62) of the stator teeth (26) are oriented along a radial direction (30) towards the centre point (64) of the circular ring (24) in the fully assembled, connected state of the stator segments (14), and the position of the tooth axis (62) of the second stator segment (18) differs from the radial direction (30), and in particular is not oriented parallel to the tooth axis (62) of the first stator element (16), during winding of the second stator segment (18).

3. Method for producing a stator (12) according to one of the preceding claims, **characterized in that** the first and the second tooth axis (62) form a winding angle (66) [point of intersection (65) of the tooth axes (62) radially outside the stator segments (14)] of between 40° and 120°, in particular of between 60° and 90°, during winding of the second stator segment (18).

4. Method for producing a stator (12) according to one of the preceding claims, **characterized in that** the second stator segment (18), after winding of the said stator segment, is pivoted in relation to the first stator segment (16) in such a way that the tooth axis (62) of the second stator segment (18) is arranged in the radial direction (30), wherein the coil wire (44) is formed between the first and the second stator segment (16, 18) as the connecting wire (42) which acts as a joint or hinge during pivoting in particular.

5. Method for producing a stator (12) according to one of the preceding claims, **characterized in that** the first and the second coil element (17, 19) are wound in opposite directions - in particular are wound by means of flyer winding.

6. Method for producing a stator (12) according to one of the preceding claims, **characterized in that** the coil elements (15) are wound onto insulating masks (54) which surround the stator teeth (26) and, in particular, the stator teeth (26) with the circular segments (28) are designed as T-shaped metal lamination sheets (34).

7. Method for producing a stator (12) according to one of the preceding claims, **characterized in that** the wire feed (48) of the first coil element (17) and the wire outlet (52) of the second coil element (19) are also guided through the radial cutouts (58).

8. Method for producing a stator (12) according to one of the preceding claims, **characterized in that**, after winding of the second stator segment (18), a third and/or a further stator segment (20) is wound with a continuously wound uninterrupted coil wire (44), and in particular the third stator segment (20) is arranged offset by an angle of 100° to 140° - preferably by approximately 120° - in relation to the second stator segment (18) in the circumferential direction (31).

9. Method for producing a stator (12) according to one of the preceding claims, **characterized in that** all further uninterrupted continuously wound connecting wires (43) to further coil elements (15) are also arranged radially outside the insulating masks (54).

10. Method for producing a stator (12) according to one of the preceding claims, **characterized in that** the stator segments (14) are mechanically connected to one another by means of adhesive bonding or welding or clamping.

11. Stator (12) having a plurality of separately manufactured stator segments (14) which have insulating masks (54), wherein a first stator segment (16) with a first coil element (17) and a second stator segment (18) with a second coil element (19) and a third stator segment (20) with a third coil element (21) are continuously wound with an uninterrupted coil wire (44), and the first and the second stator segment (16, 18) with the first and the second coil element (17, 19) are arranged immediately next to one another in the circumferential direction (31) of the stator (12), and further stator segments (20) are arranged to form a circular ring (24) and the individual stator segments (16, 18, 20) are mechanically connected to one another, wherein the insulating masks (54) of the stator segments (16, 18) have radial cutouts (58) through which a connecting wire (42) between the first and the second coil element (17, 19), which together form a twin coil (46), is guided in the radial direction (30), wherein the connecting wire (42) between the first and the second coil element (17, 19) and the connecting wire (43) between the second coil element (19) and the third coil element (21) remain radially outside the insulating mask (54) even after assembly is complete and do not protrude beyond the insulating mask (54) with respect to the axial direction (33) of the stator (12).

12. Stator (12) according to Claim 11, **characterized in that** the stator (12) has three electrical phases each with two winding phases (40) which are connected in parallel, wherein in particular each winding phase (40) has a twin coil (46) which is made up of two coil elements (17, 19) which are immediately adjacent in the circumferential direction (31) and are continuously wound with an uninterrupted coil wire (44).

13. Electrical machine (10) comprising a stator (12) according to either of Claims 11 and 12, **characterized in that** a rotor (13) having permanent magnets (22) is rotatably mounted radially within the stator (12), and the stator (12) is adhesively bonded, in particular, into a housing part (11).

## Revendications

1. Procédé permettant de fabriquer un stator (12) sur lequel sont disposés plusieurs faisceaux de bobinage électriques (40) dotés de parties de bobine individuelles (15), **caractérisé par** les étapes suivantes :
- production de plusieurs segments de stator séparés (14) qui comprennent des masques isolants (54),
- bobinage d'un premier segment de stator (16) doté d'une première partie de bobine (17),
- bobinage d'un deuxième segment de stator (18) doté d'une deuxième partie de bobine (19) avec un fil de bobinage (44) ininterrompu bobiné,
- bobinage d'un troisième segment de stator (20) doté d'une troisième partie de bobine (21) avec le fil de bobinage (44) ininterrompu bobiné,
- agencement des premier et deuxième segments de stator (16, 18) dotés de la première et de la deuxième partie de bobine (17, 19) de manière directement voisine dans la direction périphérique (31) du stator (12),
- agencement d'autres segments de stator (20) en un anneau circulaire (24),
- liaison mécanique des segments de stator individuels (16, 18, 20),
- dans lequel les masques isolants (54) comprennent des évidements radiaux (58) à travers lesquels le fil de liaison (42) entre la première et la deuxième partie de bobine (17, 19) est guidé dans la direction radiale (30), lesquelles parties de bobine forment conjointement une bobine double (46),
- dans lequel le fil de liaison (42) est disposé radialement à l'extérieur des masques isolants (54) avant le bobinage du deuxième segment de stator (18),
- dans lequel le fil de liaison (42) ne dépasse pas au-delà du masque isolant (54) par rapport à une direction axiale (33) du stator (12) lors du bobinage et
- dans lequel le fil de liaison (42) entre la première et la deuxième partie de bobine (17, 19) et le fil de liaison (43) entre la deuxième partie de bobine (19) et la troisième partie de bobine (21) demeurent radialement à l'extérieur du masque isolant (54) également une fois le montage fini.

2. Procédé permettant de fabriquer un stator (12) selon la revendication 1, **caractérisé en ce que** chaque segment de stator (14) comprend un segment circulaire (28) doté d'une dent de stator (26) le long d'un axe de dent (62), les axes (62) des dents de stator (26) étant, à l'état relié prémonté des segments de stator (14), orientés le long d'une direction radiale (30) vers le centre (64) de l'anneau circulaire (24), et pendant le bobinage du deuxième segment de stator (18), la position de l'axe de dent (62) du deuxième segment de stator (18) différant de la direction radiale (30), et étant orientée en particulier de manière non parallèle à l'axe de dent (62) du premier élément de stator (16).

3. Procédé permettant de fabriquer un stator (12) selon l'une des revendications précédentes, **caractérisé en ce que**, pendant le bobinage du deuxième segment de stator (18), les premier et deuxième axes de dent (62) forment un angle de bobinage (66) [point d'intersection (65) des axes de dent (62) radialement à l'extérieur des segments de stator (14)] compris entre 40° et 120°, en particulier entre 60° et 90°.

4. Procédé permettant de fabriquer un stator (12) selon l'une des revendications précédentes, **caractérisé en ce que** le deuxième segment de stator (18), après son bobinage, est pivoté par rapport au premier segment de stator (16) de telle sorte que l'axe de dent (62) du deuxième segment de stator (18) soit disposé dans la direction radiale (30), le fil de bobinage (44) entre le premier et le deuxième segment de stator (16, 18) étant réalisé en tant que fil de liaison (42) qui agit en tant qu'articulation ou charnière en particulier lors du pivotement.

5. Procédé permettant de fabriquer un stator (12) selon l'une des revendications précédentes, **caractérisé en ce que** la première et la deuxième partie de bobine (17, 19) sont bobinées en sens contraires, en particulier par bobinage flyer.

6. Procédé permettant de fabriquer un stator (12) selon l'une des revendications précédentes, **caractérisé en ce que** les parties de bobine (15) sont bobinées sur des masques isolants (54) qui entourent les dents de stator (26) et en particulier les dents de stator (26) sont réalisées en tant que tôles en lamelles (34) en forme de T avec les segments circulaires (28).

7. Procédé permettant de fabriquer un stator (12) selon l'une des revendications précédentes, **caractérisé en ce qu'**également l'amenée de fil (48) de la première partie de bobine (17) et la sortie de fil (52) de la deuxième partie de bobine (19) sont guidées à travers les évidements radiaux (58).

8. Procédé permettant de fabriquer un stator (12) selon l'une des revendications précédentes, **caractérisé en ce qu'**après le bobinage du deuxième segment de stator (18), un troisième et/ou un autre segment de stator (20) sont bobinés avec un fil de bobinage (44) ininterrompu bobiné, et en particulier le troisième segment de stator (20) est disposé de manière décalée dans la direction périphérique (31) d'un angle de 100° à 140° - de préférence d'approximativement 120° - par rapport au deuxième élément de stator (18).

9. Procédé permettant de fabriquer un stator (12) selon l'une des revendications précédentes, **caractérisé en ce qu'**également tous les autres fils de liaison enroulés ininterrompus (43) par rapport à d'autres parties de bobine (15) sont disposés radialement à l'extérieur des masques isolants (54).

10. Procédé permettant de fabriquer un stator (12) selon l'une des revendications précédentes, **caractérisé en ce que** les segments de stator (14) sont reliés mécaniquement les uns aux autres par collage ou soudage ou serrage.

11. Stator (12) comportant des segments de stator (14) fabriqués séparément comprenant des masques isolants (54), dans lequel un premier segment de stator (16) doté d'une première partie de bobine (17) et un deuxième segment de stator (18) doté d'une deuxième partie de bobine (19) et un troisième segment de stator (20) doté d'une troisième partie de bobine (21) sont bobinés avec un fil de bobinage ininterrompu (44), et les premier et deuxième segments de stator (16, 18) dotés de la première et de la deuxième partie de bobine (17, 19) sont disposés de manière directement voisine dans la direction périphérique (31) du stator (12), et d'autres segments de stator (20) sont disposés en un anneau circulaire (24) et les segments de stator individuels (16, 18, 20) sont reliés mécaniquement les uns aux autres, dans lequel les masques isolants (54) des segments de stator (16, 18) comprennent des évidements radiaux (58) à travers lesquels le fil de liaison (42) entre la première et la deuxième partie de bobine (17, 19) est guidé dans la direction radiale (30), lesquelles parties de bobine forment conjointement une bobine double (46), dans lequel le fil de liaison (42) entre la première et la deuxième partie de bobine (17, 19) et le fil de liaison (43) entre la deuxième partie de bobine (19) et la troisième partie de bobine (21) demeurent radialement à l'extérieur du masque isolant (54) également une fois le montage fini, et ne dépassent pas au-delà du masque isolant (54) par rapport à la direction axiale (33) du stator (12).

12. Stator (12) selon la revendication 11, **caractérisé en ce que** le stator (12) comprend trois phases électriques comportant respectivement deux faisceaux de bobinage (40) connectés en parallèle, chaque faisceau de bobinage (40) comprenant en particulier une bobine double (46) qui est composée de deux parties de bobine (17, 19) directement adjacentes dans la direction périphérique (31) et bobinées avec un fil de bobinage ininterrompu (44).

13. Machine électrique (10) comportant un stator (12) selon l'une des revendications 11 ou 12, **caractérisé en ce qu'**un rotor (13) comprenant des aimants permanents (22) est monté rotatif radialement à l'intérieur du stator (12), et le stator (12) est en particulier collé dans une partie de carter (11).
